# EUROPEAN PATENT APPLICATION

(11) **EP 3 288 301 A1**
(43) Date of publication of application: **28.02.2018**
(21) Application number: 16185170.4
(22) Date of filing: 22.08.2016
(51) Int. Cl.: H04W 8/24, H04W 60/02, H04W 64/00, H04W 88/02, H04W 88/14

(54) **COMMUNICATION DEVICE, COMMUNICATION TERMINAL, METHOD FOR SETTING CONFIGURATION PARAMETERS AND METHOD FOR INDICATING A NON-MOBILITY STATE OF A COMMUNICATION TERMINAL**

(71) Applicant: NTT DoCoMo, Inc., Tokyo 100-6150 (JP)
(72) Inventor: Guerzoni, Riccardo, 80687 Munich (DE); Mutikainen, Jari, 80687 Munich (DE); Kiess, Wolfgang, 80687 Munich (DE); Koshimizu, Takashi, 80687 Munich (DE); Husain, Syed, 80687 Munich (DE)
(74) Representative: Viering, Jentschura & Partner mbB Patent- und Rechtsanwälte

(57) **Abstract**

According to one embodiment, a communication device is described comprising a receiver, configured to receive, from a communication terminal, a message on a communication layer above radio resource control layer and below application layer, wherein the message indicates a non-mobility state of the communication terminal and a controller configured to set configuration parameters of the communication layer in response to the message.

## Description

The present disclosure relates to communication devices, communication terminals, methods for setting configuration parameters and methods for indicating a non-mobility state of a communication terminal.

According to recent studies in 3GPP standardization the optimization of tracking area parameters when a User Equipment (UE) stays in the same tracking area for long time is considered. Specifically, the 3GPP Study on Architecture for Next Generation System introduces actions triggered by the core network when detecting that a UE is stationary. This detection is done by the network side, by observing reports from the UE on the tracking area it currently resides in (typically periodic tracking area updates). An optimization action may consist in progressively shrinking the list of tracking areas where the UE can move without reporting location updates. Another action may consist in requesting the UE to increase the time to report periodic tracking area update. These actions result in reduced signalling for paging stationary devices, by performing paging in limited areas, and for periodic tracking area updates, which occur less frequently. Reduced signalling results also in less power consumption in the UE.

However, since the periodicity of the tracking area reports by the UE may be relatively long (a typical default value is 54 minutes) the detection that the UE is stationary based on periodic tracking area updates may take several hours and only after this time, the core network performs a corresponding optimization action.

Accordingly, approaches to shorten the time to trigger signalling optimization in the core network for a stationary device are desirable.

According to one embodiment, a communication device is provided including a receiver, configured to receive, from a communication terminal, a message on a communication layer above radio resource control layer and below application layer, wherein the message indicates a non-mobility state of the communication terminal and a controller configured to set configuration parameters of the communication layer in response to the message.

According to further embodiments, a communication terminal, a method for setting configuration parameters and a method for indicating a non-mobility state of a communication terminal according to the communication device described above are provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a communication system, e.g. an LTE (Long Term Evolution) communication system.
- Figure 2: shows an example of a control plane protocol stack.
- Figure 3: shows a message flow diagram showing a message flow between a UE and a core network.
- Figure 4: shows a communication arrangement.
- Figure 5: shows a message flow diagram showing a message flow between a UE and a core network.
- Figure 6: shows a communication device.
- Figure 7: shows a flow diagram illustrating a method for setting communication parameters.
- Figure 8: shows a communication terminal according to an embodiment.
- Figure 9: shows a flow diagram illustrating a method for indicating a non-mobility state.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

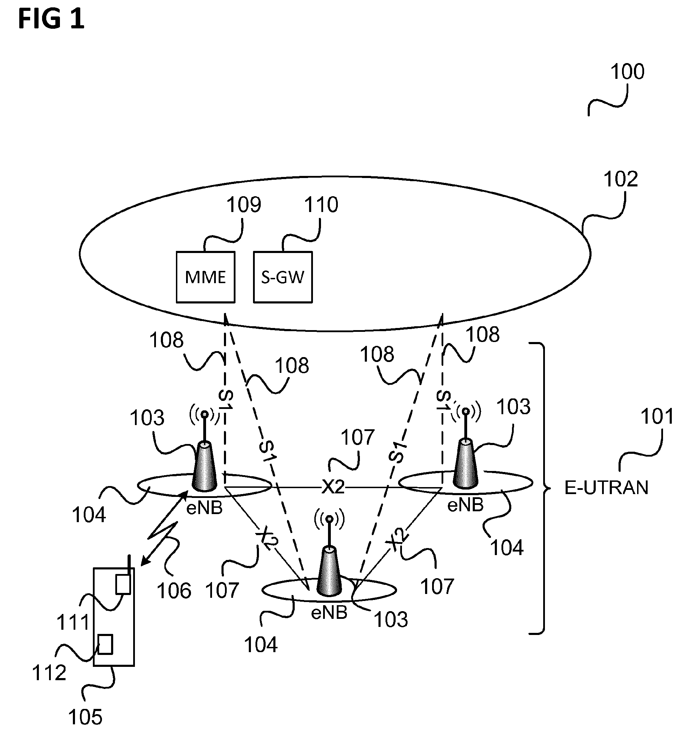

Figure 1 shows a communication system 100, e.g. an LTE (Long Term Evolution) communication system or a 5G communication system.

The communication system 100 includes a radio access network (e.g. an E-UTRAN, Evolved UMTS (Universal Mobile Communications System) Terrestrial Radio Access Network according to LTE) 101 or a 5G radio access network and a core network (e.g. an EPC, Evolved Packet Core, according LTE or a 5G core network) 102. The radio access network 101 may include base (transceiver) stations (e.g. eNodeBs, eNBs, according to LTE) 103. Each base station 103 provides radio coverage for one or more mobile radio cells 104 of the radio access network 101.

A mobile terminal (also referred to as UE, user equipment, or MS, mobile station) 105 located in one of the mobile radio cells 104 (in this example the leftmost radio cell 104) may communicate with the core network 102 and with other mobile terminals 105 via the base station providing coverage in (in other words operating) the mobile radio cell.

Control and user data are transmitted between a base station 103 and a mobile terminal 105 located in the mobile radio cell 104 operated by the base station 103 over the air interface 106 on the basis of a multiple access method.

The base stations 103 are interconnected with each other by means of a first interface 107, e.g. an X2 interface. The base stations 103 are also connected by means of a second interface 108, e.g. an S1 interface, to the core network, e.g. to an MME (Mobility Management Entity) 109, and a Serving Gateway (S-GW) 110. For example, the MME 109 is responsible for controlling the mobility of mobile terminals located in the coverage area of E-UTRAN, while the S-GW 110 is responsible for handling the transmission of user data between mobile terminals 105 and core network 102.

The radio access network 101 and the core network may support communication according to various communication technologies, e.g. mobile communication standards. For example, each base station 103 may provide a radio communication connection via the air interface between itself and the mobile terminal 105 according to 5G (Fifth Generation), LTE, UMTS, GSM (Global System for Mobile Communications), EDGE (Enhanced Data Rates for GSM Evolution) radio access. Accordingly, the radio access network 102 may operate as an E-UTRAN, a UTRAN, a GSM radio access network, or a GERAN (GSM EDGE Radio Access Network). Analogously, the core network 102 may include the functionality of an EPC, a UMTS core network or a GSM core network. The approaches described herein may also be applied to future radio access technologies such as 5G.

For uplink radio communication via the air interface 106, the mobile terminal 105 includes a radio transceiver 111.

The mobile terminal 105 may include an identity module 112 (e.g. implemented by a chip card) that allows the mobile terminal 105 to identify itself as a subscriber of the communication network (e.g. as an LTE or 5G network subscriber) formed by the radio access network 101 and the core network 102 and thus to use the communication network as a home network.

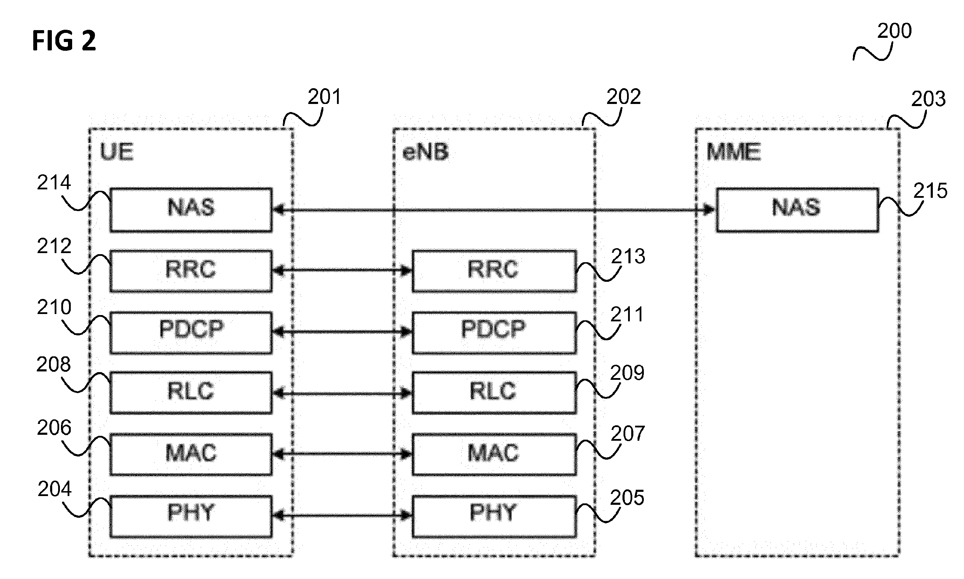

Figure 2 shows an example of a control plane protocol stack.

The components of various layers are shown for a UE 201, e.g. corresponding to the mobile terminal 105, an eNB 202, e.g. corresponding to the base station 103 serving the mobile terminal 105, and a core network, specifically an MME 203, e.g. corresponding to MME 109.

Both the UE 201 and the eNB 202 include respective physical layer components 204, 205, MAC (medium access control) layer components 206, 207, RLC (Radio Link Control) layer components 208, 209, PDCP (Packet Data Convergence Protocol) layer components 210, 211 and RRC (Radio Resource Control) layer components 212, 213. These components and the communication between components of these layer can be seen to realize radio access for the UE 201.

It should be noted that on control plane, RLC and MAC sublayer components 206-209 perform the same functions as for the user plane.

In the control plane, the UE 201 communicates with the core network, i.e. MME 203, via the Non-access stratum (NAS). The non-access stratum (NAS) is the highest stratum of the control plane between the UE 201 and MME 203. The NAS is used to manage the establishment of communication sessions and for maintaining continuous communications with the user equipment as it moves. The NAS is defined in contrast to the access stratum which is responsible for carrying information over the wireless portion of the network.

The RRC layer components 212, 213 perform a NAS direct message transfer between the NAS components 214, 215 of the UE 201 and the MME 203.

The NAS is also responsible for establishing and maintaining IP connectivity between the UE 201 and the core network 203.

By means of the TCP/IP stack the UE 201 may have a connection to another UE or a server (e.g. an Internet server) used on level of the application layer (not shown) which lies above the NAS. The application layer (and the other layers mentioned and shown herein) may be understood in accordance with the Open Systems Interconnection model (OSI model).

Due to the mobility of UEs, the network side keeps track of their location. In LTE, while a UE 105 is in active state, its location is known by the network at cell level (i.e. on a cell granularity). However, while the UE 105 is in idle state, its location is known by the network 101, 102 at TAI list (tracking area identity list) level (i.e. on a TAI list granularity), instead of cell level. The network operator defines a group of neighbour eNBs as a TA. The tracking area identity list may include or essentially consist of list of Tracking Areas.

According to current E-UTRAN specifications a UE 105 sends a TAU (Tracking Area Update) when (i) it selects a cell that belongs to a Tracking Area (TA) that is not in the list of TAs the UE 105 previously received from the MME 109 or (ii) a periodic TA update timer previously received from the MME 109 expires. The MME 109 responds with an updated list of TAIs; the list may include the new TA as well as old ones. In case of paging, the MME 109 pages the UE 105 in the TAs that are part of the list.

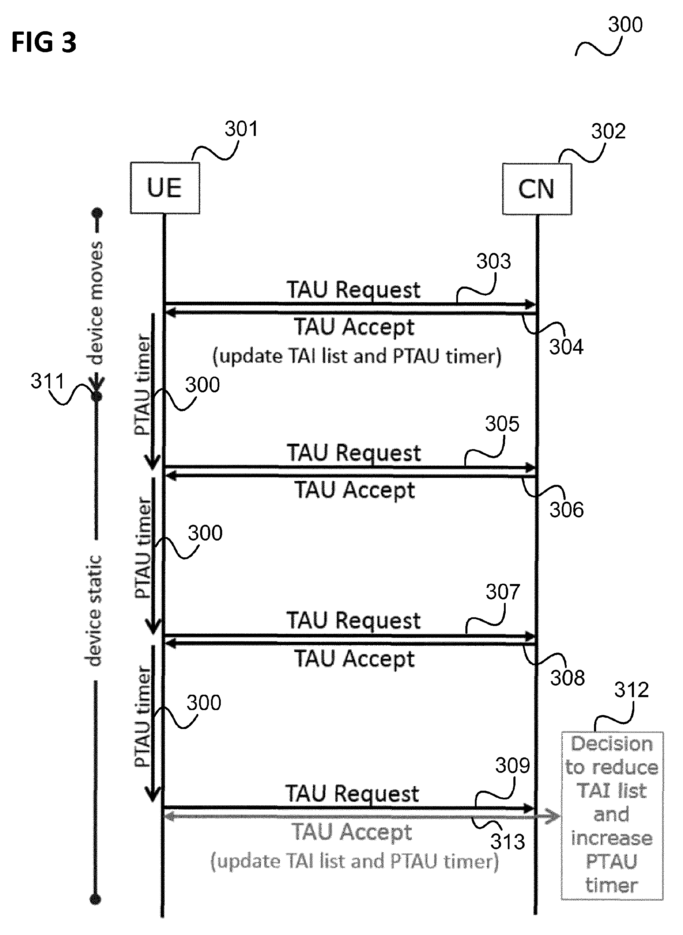

A possible optimization action performed by the MME 109 may consist in reducing the list of TAs by using the history of TA identifiers reported by the UE 105 in an Attach Request message or a TAU Request message. In order to reduce the signalling between the UE 105 and the MME 109, the MME 109 may also allocate a UE specific periodic TAU timer up to 320h based on the subscription, while the default timer value is 54 min. This approach is illustrated in figure 3.

Figure 3 shows a message flow diagram 300 showing a message flow between a UE 301, e.g. corresponding to mobile terminal 105, and a core network 302, for example corresponding to core network 102.

The core network 102 may detect that the UE 301 is in a non-mobility state by keeping the history of the tracking area identifiers reported by the UE in tracking area update sent in 303, 305, 307, 309 and answered by the core network 302 in 304, 306, 308 and 309, respectively. These reports are triggered when the UE crosses the border of a tracking area or periodically, after a PTAU (periodic tracking area update) period 310 has elapsed. However, since the periodicity is by default set to 54 minutes the detection that the UE is stationary (starting at a point in time 311) based on periodic tracking area updates may take several hours and only after this time, the core network 302 performs a corresponding optimization action such as reducing the TAI (Tracking Area Identity) list and increasing the PTAU timer in 312 and, in 313, sends a response message to the UE 301 instructing the UE 301 to use the reduced TAI list and increased PTAU timer.

How the MME triggers TAU signalling optimization for a stationary device is not described in the current 3GPP specification. TAU optimization may for example be triggered when the UE reports the same TA or list of TAs for long time.

According to 3GPP, a UE 105 may report mobility information to introduce the possibility for the UE to provide mobility information to the network during transition from idle state to RRC connected state. The UE may for example indicate its mobility state like low, medium, high, to influence to the decision whether the eNB keeps the UE in RRC idle or RRC connected. Reporting mobility information is thus meant to assist the eNB in configuring connected mode parameters and connection release handling and the core network is not involved in this signalling optimization.

Other examples of the usage of mobility information for example include the transmission, by a user equipment (UE), of mobility-related information in a wireless communication system wherein a mobility indication is sent to the UTRAN and it is used to optimize RAN procedures.

Another example involves receiving, by a network node from a user equipment, an indication of a mobility state (low or high mobility) of the UE. The indication is used by the network node to adapt a time to trigger value in order to improve handover operation.

In a further example, a UE determines that it has to report mobility information, e.g. how long the UE stationed in the same cell. The information is used by the radio access network to optimize radio parameter settings (such as parameters related to the mobility and/or the connected state DRX parameters).

In the following, an approach is described in which a mobile terminal (e.g. a UE) sends a non-mobility indication to the core network when the mobile terminal detects a non-mobility state such that the core network may for example adapt the configuration of reachability procedures, e.g. tracking update parameters such as the length of the TAI list and the PTAU timer.

After detection of a non-mobility state, a UE sends a non-mobility indication to a core network control plane function. The non-mobility indication is included in a non-access stratum (NAS) message sent from the UE to a control plane function in the core network (e.g. EPC or 5G Core Network) in charge of mobility management, e.g. an MME. As a consequence of the reception of the non-mobility indication, the core network function may trigger optimizations of location tracking to reduce signalling load.

Compared to the approach illustrated in figure 3, this allows a faster detection of a non-mobility state of a stationary device and consequently allows shortening the time to trigger signalling optimization in the core network for a stationary device and for example:
- Reducing the paging area for a temporarily stationary device by keeping only the last reported TA in the TA list and thus reducing the number of cell where a UE needs to be paged in case of paging;
- Reducing the frequency of reporting of periodic TAUs for a temporarily stationary device, saving core network and radio network signalling.

This approach is in the following described in more detail.

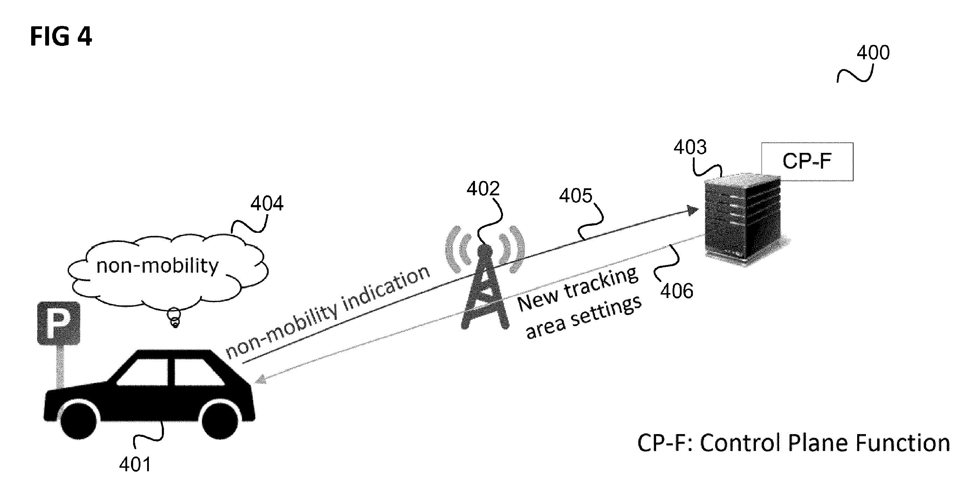

Figure 4 shows a communication arrangement 400.

The communication arrangement 400 includes a mobile terminal 401, represented as a car to suggest its possible high mobility, e.g. corresponding to mobile terminal 105, a base station 402, e.g. corresponding to the mobile terminal's serving base station 103 and a control plane function 403 of the core network, e.g. a NAS component 214 of the core network.

It is assumed that at a certain point in time, in 404, the mobile terminal 401 stops moving and detects a non-mobility state. After detection of the non-mobility state, the mobile terminal 401 sends, in 405, a message to the core network control plane function 403 including an explicit non-mobility indication.

The mobile terminal 401 includes the non-mobility indication in a non-access stratum (NAS) message sent from the mobile terminal 401 to the control plane function 403 (e.g. a EPC or 5G core network function) in charge of mobility management. The non-mobility indication may for example be part of the UE Network capability Information Element in an Attach Request or a TAU Request message. Regarding the timing of sending the non-mobility indication the UE may transmit the non-mobility indication in an explicit message (with this, the detection of the non-mobility state triggers the generation and transmission of the message) or it uses the next available periodic TAU request message to transmit this indication. Using a periodic message (that is sent anyway) has the advantage to avoid generating ad-hoc a TAU Request message for the non-mobility indication, and thus it does not generate any additional signalling.

In response to the reception of the non-mobility indication, the core network 403 function may decide to implement signalling optimization actions for the UE 401. For instance (i) updating the list of Tracking Areas of the UE 401 by including only the last reported TA identifier and/or (ii) indicating to the UE 401 to increase the timer to report Periodical TAU. In this example, in 406, the CP-F dispatches the updated tracking area parameters by responding to the message transmitted in 405, e.g. to a TAU Request, with a message (e.g. a TAU Accept message) including the updated parameters.

As a complementary feature the UE 401 may also detect a 'mobility again' state and as reaction send a mobility indication to notify the core network that the UE 401 started to move again. Also in this case the indication may be included in a non-access stratum message such as a TAU request. In any case this message is optional, as the core network can also discover that the UE is moving again by receiving a normal TAU from the mobile terminal 401.

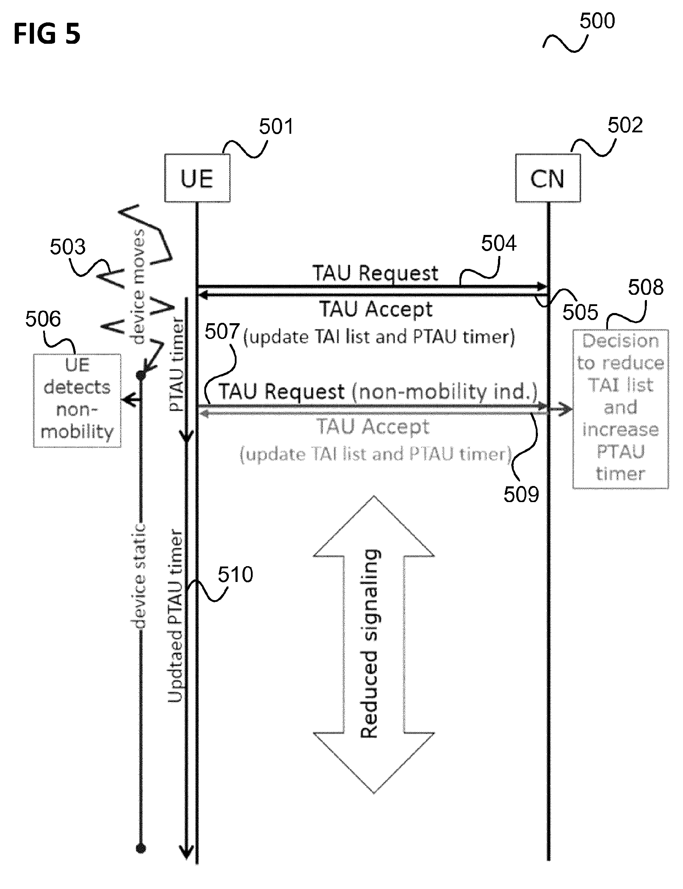

The message flow between the UE 401 and the CP-F 402 is shown in more detail in figure 5.

Figure 5 shows a message flow diagram 500 showing a message flow between a UE 501, e.g. corresponding to mobile terminal 401, and a core network 502, for example including the CP-F 403.

In a period during which the mobile terminal 503 moves, it regularly sends tracking area updates, such as tracking area update in 504, answered by the core network 502, e.g. in 505, as described in context of figure 3.

The detection of non-mobility in 506 by the UE 501 triggers the generation and transmission of a TAU request message in 507 which includes an indication (e.g. a flag set to a corresponding value or one of a plurality of values, each value corresponding to a mobility level like stationary, low, medium and high) that the UE 501 is stationary. In response, in 508, the core network 302 performs a corresponding optimization action such as reducing the TAI (Tracking Area Identity) list and increasing the PTAU timer and, in 509, sends a response message to the UE 501 instructing the UE 501 to use the reduced TAI list and increased PTAU timer. In the following period 510, e.g. until it moves again, the mobile terminal 501 uses the updated PTAU timer and the updated TAI list and the system thus profits, shortly after the UE stops moving, from reduced signalling.

It should be noted that non-mobility and non-moving may be understood as the movement speed is below a certain threshold (e.g. 0.1km/h, 0.5hm/h or 1km/h), i.e. it does not have to mean a perfect stand-still, and may in particular also correspond to a level of low mobility which is sufficiently low to justify the adjustment of parameters like the size of the TAI list and the PTAU timer.

The non-mobility state may be determined by the UE's NAS function 214, e.g. based on the reception of an API (application programming interface) report from another component indicating:
- that the UE's geographical position (e.g. determined via a geo-localization system, e.g. by GPS module of the UE) of the device has not changed for a period of time determined by a timer (e.g. for 5 minutes, 10 minutes or 30 minutes), or
- that the UE was configured via software to act as stationary device, or
- that the UE was configured via a hardware switch to act as stationary device,
- that other machinery forming together with the UE a device (like a car) reports that the device is stationary (e.g. motor of a car switched off and key removed and hence the mobile device can be expected to be stationary for at least some time).

It should be noted that the approach of an active indication of non-mobility of a mobile terminal as in the example of figures 4 and 5 may for example be applied to a mobile communication device expected to stop for several hours in the same location: an explicit non-mobility indication reported by the device would strongly reduce the signalling related to this device (e.g. UE).

In case the network reduces the size of the tracking area, the number of cells in which the UE has to be paged in case of paging is much smaller, leading to less radio layer signalling. In case the network extends the timer for tracking area updates, the UE will less frequently report its tracking area, thus reducing both radio and core network signalling loads.

The UE 401 may send in the NAS message including the non-mobility indication a validity indication along with the non-mobility indication to indicate how long the non-mobility indication applies.

The core network control function 403 may use the validity for different purposes. In one case, the core network could ignore the non-mobility indication if it considers that the validity indication is too short. In another case the core network can revert back to the old parameter values when the validity expires. The core network may do this by the CP-F 403 sending an update message to the UE with new tracking area parameters.

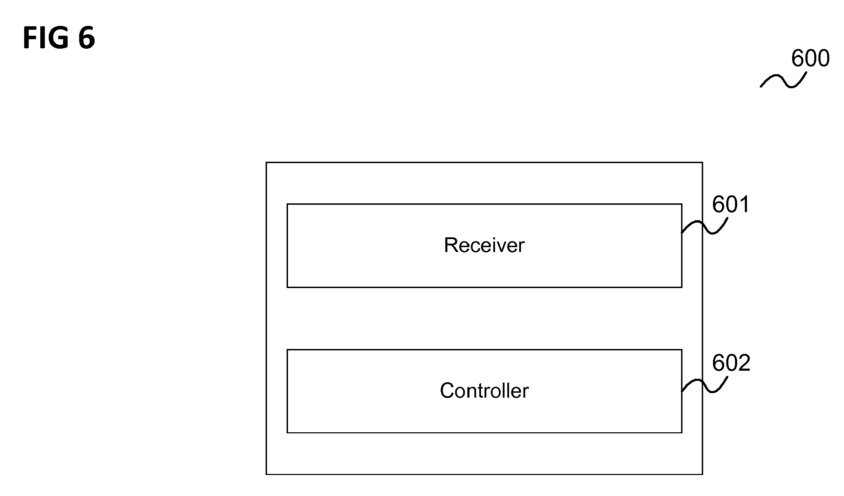

In summary, according to various embodiments, a communication device 600 is provided as illustrated in figure 6.

Figure 6 shows a communication device 600.

The communication device 600 includes a receiver 601, configured to receive, from a communication terminal, a message on a communication layer above radio resource control layer and below application layer, wherein the message indicates a non-mobility state of the communication terminal.

The communication device 600 includes a controller 602 configured to set configuration parameters of the communication layer in response to the message.

According to various embodiments, in other words, a communication device which is for example part of the network side of a communication system, e.g. of the network side of a cellular communication system, for example an MME of an EPC, receives an indication of a non-mobility state from a communication terminal on a layer above the layers of the radio access network (and below application layer), e.g. on the level of the core network, e.g. a non-access stratum message. In other words, there is a direct signalling between the communication terminal (e.g. a UE) and the core network regarding the mobility state (e.g. whether the communication terminal is moving or stationary). The core network may, based on the information regarding the mobility state, set configuration parameters, e.g. optimize a configuration, such as trigger a tracking area optimization.

The communication device may further receive an indication that the non-mobility state has ended, e.g. by means of a second message from the communication terminal. It may in response to the second message set the configuration parameters (e.g. reset them to their original values), e.g. increase the area in which the communication terminal may move without reporting location update information, e.g. expand a tracking area identity list associated with the communication terminal in response to the message, or increase the rate with which the communication terminal is to report location update information in response to the message, e.g. decrease a periodic tracking area update timer associated with the communication terminal in response to the message, or both.

The approach of figure 6 may for example be applied to vehicular applications, where the connected device, i.e. the communication terminal, e.g. installed in a vehicle, detects a period of non-mobility. It may also applied to Internet of Things (IoT) applications involving a high number of connected objects (e.g. corresponding to a communication terminal signalling mobility information) that are normally stationary but require area tracking when moving.

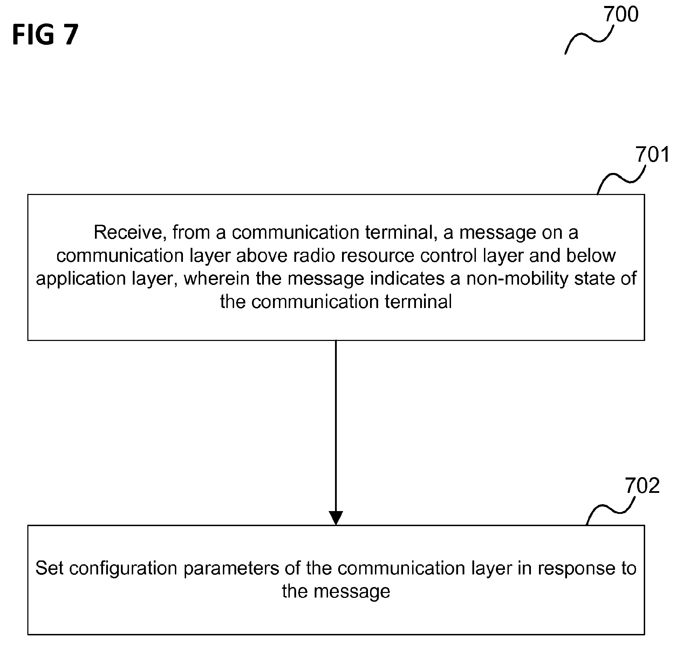

The communication device 600 for example carries out a method as illustrated in figure 7.

Figure 7 shows a flow diagram 700 illustrating a method for setting communication parameters.

In 701, a message is received from a communication terminal on a communication layer above radio resource control layer and below application layer, wherein the message indicates a non-mobility state of the communication terminal.

In 702, configuration parameters of the communication layer are set in response to the message.

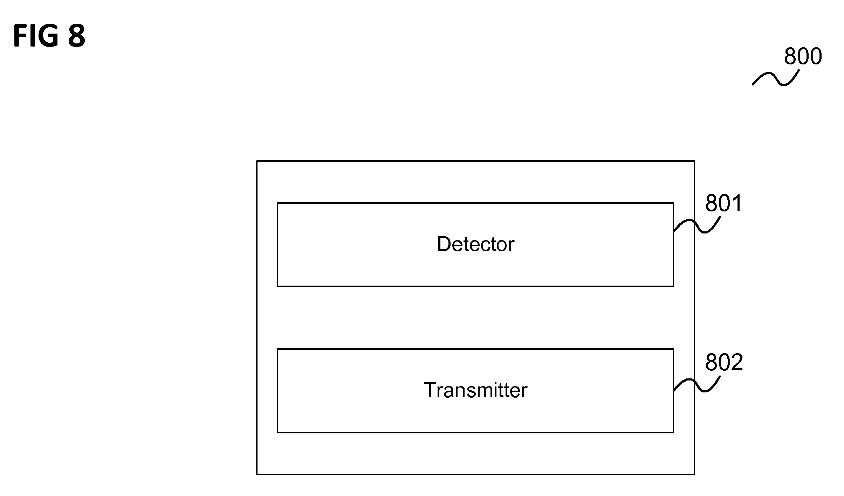

According to a further embodiment, a communication terminal as illustrated in figure 8 is provided. The communication device 600 may for example receive the message from the communication terminal of figure 8.

Figure 8 shows a communication terminal 800 according to an embodiment.

The communication terminal 800 includes a detector 801 configured to detect a non-mobility state of the communication terminal 800.

Further, the communication terminal 800 includes a transmitter 802 configured to, in response to a detection of the non-mobility state, transmit a message on a communication layer above radio resource control layer and below application layer, wherein the message indicates the non-mobility state of the communication terminal to a communication device.

The communication terminal may for example be configured to detect the non-mobility state based on at least one of the use of proximity sensors, a hardware or a software switch or position information from a GNSS global navigation satellite system) receiver such as GPS (Global Positioning System) or GLONASS.

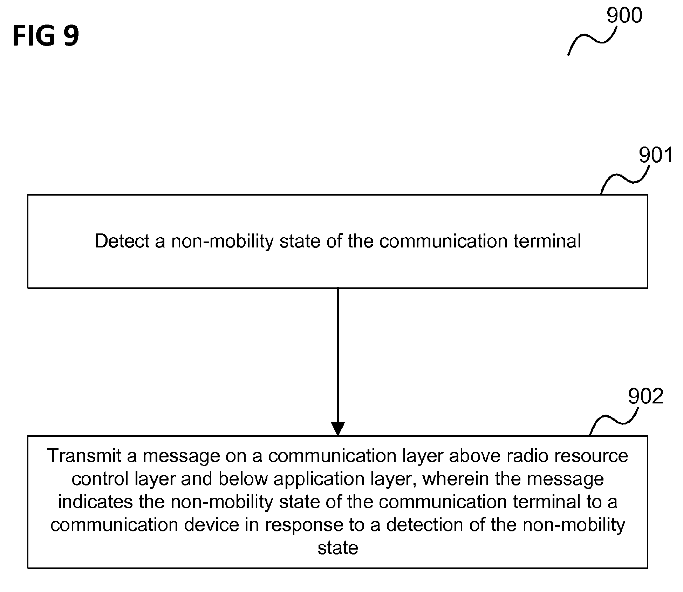

The communication terminal 800 for example carries out a method as illustrated in figure 9.

Figure 9 shows a flow diagram 900 illustrating a method for indicating a non-mobility state.

In 901, a non-mobility state of a communication terminal is detected.

In 902, a message is transmitted on a communication layer above radio resource control layer and below application layer, wherein the message indicates the non-mobility state of the communication terminal to a communication device in response to a detection of the non-mobility state.

Various examples are described below:
Example 1 is a communication device comprising: a receiver, configured to receive, from a communication terminal, a message on a communication layer above radio resource control layer and below application layer, wherein the message indicates a non-mobility state of the communication terminal and a controller configured to set configuration parameters of the communication layer in response to the message.
Example 2 is the communication device of Example 1, wherein the non-mobility state is a state in which the movement speed of the communication terminal is below or equal to a predetermined threshold.
Example 3 is the communication device of Example 1 or 2, wherein the message is a control plane message.
Example 4 is the communication device of any one of Examples 1 to 3, wherein the message is a non-access stratum message.
Example 5 is the communication device of any one of Examples 1 to 4, wherein the message is an attach request or a tracking area update message.
Example 6 is the communication device of any one of Examples 1 to 5, wherein the configuration parameters include tracking update parameters of the communication terminal.
Example 7 is the communication device of any one of Examples 1 to 6, wherein the controller is configured to reduce an area in which a paging message addressed to the communication terminal is to be sent in response to the message.
Example 8 is the communication device of any one of Examples 1 to 7, wherein the controller is configured to decrease the area in which the communication terminal may move without reporting location update information in response to the message.
Example 9 is the communication device of any one of Examples 1 to 8, wherein the controller is configured to reduce a tracking area identity list associated with the communication terminal in response to the message.
Example 10 is the communication device of any one of Examples 1 to 9, wherein the controller is configured to reduce the rate with which the communication terminal is to report location update information in response to the message.
Example 11 is the communication device of any one of Examples 1 to 10, wherein the controller is configured to increase a periodic tracking area update timer associated with the communication terminal in response to the message.
Example 12 is the communication device of any one of Examples 1 to 11, wherein the controller is configured to adjust the configuration parameters in response to the message.
Example 13 is the communication device of Example 12, wherein the controller is configured to indicate the adjustment of the configuration parameters to the communication terminal.
Example 14 is the communication device of Example 12 or 13, further comprising a transmitter, wherein the controller is configured to control the transmitter to transmit a message to the communication terminal indicating the adjustment of the configuration parameters.
Example 15 is the communication device of any one of Examples 1 to 14, wherein the communication device implements a mobile network control node.
Example 16 is the communication device of any one of Examples 1 to 15, wherein the message indicates a validity period of the non-mobility state and the controller is configured to set the configuration parameters of the communication layer based on the validity period.
Example 17 is the communication device of any one of Examples 1 to 16, wherein the receiver is configured to receive, from the communication terminal, a second message on the communication layer, wherein the second message indicates that the non-mobility state of the communication terminal has ended and wherein the controller is configured to set the configuration parameters of the communication layer in response to the second message.
Example 18 is a method for setting configuration parameters comprising receiving, from a communication terminal, a message on a communication layer above radio resource control layer and below application layer, wherein the message indicates a non-mobility state of the communication terminal and setting configuration parameters of the communication layer in response to the message.
Example 19 is the method of Example 18, wherein the non-mobility state is a state in which the movement speed of the communication terminal is below or equal to a predetermined threshold.
Example 20 is the method of Example 18 or 19, wherein the message is a control plane message.
Example 21 is the method of any one of Examples 18 to 20, wherein the message is a non-access stratum message.
Example 22 is the method of any one of Examples 18 to 21, wherein the message is an attach request or a tracking area update message.
Example 23 is the method of any one of Examples 18 to 22, wherein the configuration parameters include tracking update parameters of the communication terminal.
Example 24 is the method of any one of Examples 18 to 23, comprising reducing an area in which a paging message addressed to the communication terminal is to be sent in response to the message.
Example 25 is the method of any one of Examples 18 to 24, comprising decreasing the area in which the communication terminal may move without reporting location update information in response to the message.
Example 26 is the method of any one of Examples 18 to 25, comprising reducing a tracking area identity list associated with the communication terminal in response to the message.
Example 27 is the method of any one of Examples 18 to 26, comprising reducing the rate with which the communication terminal is to report location update information in response to the message.
Example 28 is the method of any one of Examples 18 to 27, comprising increasing a periodic tracking area update timer associated with the communication terminal in response to the message.
Example 29 is the method of any one of Examples 18 to 28, adjusting the configuration parameters in response to the message.
Example 30 is the method of Example 29, comprising indicating the adjustment of the configuration parameters to the communication terminal.
Example 31 is the method of Example 29 or 30, comprising transmitting a message to the communication terminal indicating the adjustment of the configuration parameters.
Example 32 is the method of any one of Examples 18 to 31, carried out by a mobile network control node.
Example 33 is the method of any one of Examples 18 to 32, wherein the message indicates a validity period of the non-mobility state and the method comprises setting the configuration parameters of the communication layer based on the validity period.
Example 34 is the method of any one of Examples 18 to 33, comprising receiving, from the communication terminal, a second message on the communication layer, wherein the second message indicates that the non-mobility state of the communication terminal has ended and comprising setting the configuration parameters of the communication layer in response to the second message.
Example 35 is a communication terminal comprising a detector configured to detect a non-mobility state of the communication terminal and a transmitter configured to, in response to a detection of the non-mobility state, transmit a message on a communication layer above radio resource control layer and below application layer, wherein the message indicates the non-mobility state of the communication terminal to a communication device.
Example 36 is the communication terminal of Example 35, wherein the transmitter is configured to transmit the message to a communication device of a communication network providing radio access to the communication terminal.
Example 37 is the communication terminal of Example 35 or 36, wherein the communication device is a mobile network control node.
Example 38 is the communication terminal of any one of Examples 35 to 37, wherein the transmitter is configured to transmit the message via a serving base station of the communication terminal.
Example 39 is the communication terminal of any one of Examples 35 to 38, wherein the transmitter is configured to transmit the message in the next opportunity of transmitting a message on the communication layer to the communication device following the detection of the non-mobility state.
Example 40 is the communication terminal of any one of Examples 35 to 39, wherein the transmitter is configured to transmit the message in the next periodic transmission opportunity of the communication layer.
Example 41 is the communication terminal of any one of Examples 35 to 40, wherein the detector is configured to control the transmitter to transmit the message in response to the detection of the non-mobility state.
Example 42 is the communication terminal of any one of Examples 35 to 41, wherein the detector is a component of the communication layer.
Example 43 is the communication terminal of any one of Examples 35 to 42, wherein the detector is configured to detect the non-mobility state of the communication terminal based on a geographical position of the communication terminal remaining unchanged for a predetermined period, based on a configuration of the communication terminal to operate as a stationary device or based on an input from an external device indicating that the communication terminal can be expected to be stationary.
Example 44 is the communication terminal of any one of Examples 35 to 43, wherein the non-mobility state is a state in which the movement speed of the communication terminal is below or equal to a predetermined threshold.
Example 45 is the communication terminal of any one of Examples 35 to 44, wherein the message is a control plane message
Example 46 is the communication terminal of any one of Examples 35 to 45, wherein the message is a non-access stratum message.
Example 47 is the communication terminal of any one of Examples 35 to 46, wherein the message is an attach request or a tracking area update message.
Example 48 is the communication terminal of any one of Examples 35 to 47, wherein the detector is further configured to detect that the non-mobility state of the communication terminal has ended and wherein the transmitter is configured to, in response to the detection that the non-mobility state has ended, transmit a second message on the communication layer to the communication device, wherein the second message indicates that the non-mobility state has ended.
Example 49 is the communication terminal of any one of Examples 35 to 48, further comprising a receiver configured to receive a third message indicating the adjustment of the configuration parameters based on the non-mobility state.
Example 50 is the communication terminal of any one of Examples 35 to 49, further comprising a determiner configured to determine a validity period of the non-mobility state, wherein the message includes an indication of the validity period of the non-mobility state.
Example 51 is a method for indicating a non-mobility state of a communication terminal comprising detecting a non-mobility state of the communication terminal and transmitting a message on a communication layer above radio resource control layer and below application layer, wherein the message indicates the non-mobility state of the communication terminal to a communication device in response to a detection of the non-mobility state.
Example 52 is the method of Example 51, comprising transmitting the message to a communication device of a communication network providing radio access to the communication terminal.
Example 53 is the method of Example 51 or 52, performed by a mobile network control node.
Example 54 is the method of any one of Examples 51 to 53, comprising transmitting the message via a serving base station of the communication terminal.
Example 55 is the method of any one of Examples 51 to 54, comprising transmitting the message in the next opportunity of transmitting a message on the communication layer to the communication device following the detection of the non-mobility state.
Example 56 is the method of any one of Examples 51 to 55, comprising transmitting the message in the next periodic transmission opportunity of the communication layer.
Example 57 is the method of any one of Examples 51 to 56, comprising transmitting the message in response to the detection of the non-mobility state.
Example 58 is the method of any one of Examples 51 to 57, comprising performing the detecting in the communication layer.
Example 59 is the method of any one of Examples 51 to 58, comprising detecting the non-mobility state of the communication terminal based on a geographical position of the communication terminal remaining unchanged for a predetermined period, based on a configuration of the communication terminal to operate as a stationary device or based on an input from an external device indicating that the communication terminal can be expected to be stationary.
Example 60 is the method of any one of Examples 51 to 59, wherein the non-mobility state is a state in which the movement speed of the communication terminal is below or equal to a predetermined threshold.
Example 61 is the method of any one of Examples 51 to 60, wherein the message is a control plane message
Example 62 is the method of any one of Examples 51 to 61, wherein the message is a non-access stratum message.
Example 63 is the method of any one of Examples 51 to 62, wherein the message is an attach request or a tracking area update message.
Example 64 is the method of any one of Examples 51 to 63, comprising detecting that the non-mobility state has ended and, in response to the detection that the non-mobility state has ended, transmitting a second message on the communication layer to the communication device, wherein the second message indicates that the non-mobility state of the communication terminal has ended.
Example 65 is the method of any one of Examples 51 to 64, further comprising receiving a third message indicating the adjustment of the configuration parameters based on the non-mobility state.
Example 66 is the method of any one of Examples 51 to 65, further comprising determining a validity period of the non-mobility state, wherein the message includes an indication of the validity period of the non-mobility state.
Example 67 is a communication device comprising a receiver, configured to receive, from a communication terminal, a message indicating a non-mobility state of the communication terminal and a controller configured to set tracking update parameters of the communication terminal in response to the message.
Example 68 is the communication device of Example 67, wherein the non-mobility state is a state in which the movement speed of the communication terminal is below or equal to a predetermined threshold.
Example 69 is the communication device of Example 67 or 68, wherein the message is a control plane message.
Example 70 is the communication device of any one of Examples 67 to 69, wherein the message is a non-access stratum message.
Example 71 is the communication device of any one of Examples 67 to 70, wherein the message is an attach request or a tracking area update message.
Example 72 is the communication device of any one of Examples 67 to 71, wherein the controller is configured to reduce an area in which a paging message addressed to the communication terminal is to be sent in response to the message.
Example 73 is the communication device of any one of Examples 67 to 72, wherein the controller is configured to decrease the area in which the communication terminal may move without reporting location update information in response to the message.
Example 74 is the communication device of any one of Examples 67 to 73, wherein the controller is configured to reduce a tracking area identity list associated with the communication terminal in response to the message.
Example 75 is the communication device of any one of Examples 67 to 74, wherein the controller is configured to reduce the rate with which the communication terminal is to report location update information in response to the message.
Example 76 is the communication device of any one of Examples 67 to 75, wherein the controller is configured to increase a periodic tracking area update timer associated with the communication terminal in response to the message.
Example 77 is the communication device of any one of Examples 67 to 76, wherein the controller is configured to adjust the tracking update parameters in response to the message.
Example 78 is the communication device of any one of Examples 67 to 77, wherein the controller is configured to indicate the adjustment of the tracking update parameters to the communication terminal.
Example 79 is the communication device of any one of Examples 67 to 78, further comprising a transmitter, wherein the controller is configured to control the transmitter to transmit a message to the communication terminal indicating the adjustment of the tracking update parameters.
Example 80 is the communication device of any one of Examples 67 to 79, wherein the communication device implements a mobile network control node.
Example 81 is the communication device of any one of Examples 67 to 80, wherein the message indicates a validity period of the non-mobility state and the controller is configured to set the tracking update parameters of the communication layer based on the validity period.
Example 82 is the communication device of any one of Examples 67 to 81, wherein the receiver is configured to receive, from the communication terminal, a second message, wherein the second message indicates that the non-mobility state of the communication terminal has ended and wherein the controller is configured to set the tracking update parameters in response to the second message.
Example 83 is a method for setting tracking update parameters comprising receiving, from a communication terminal, a message indicating a non-mobility state of the communication terminal and setting tracking update parameters of the communication terminal in response to the message.
Example 84 is the method of Example 83, wherein the non-mobility state is a state in which the movement speed of the communication terminal is below or equal to a predetermined threshold.
Example 85 is the method of Example 83 or 84, wherein the message is a control plane message.
Example 86 is the method of any one of Examples 83 to 85, wherein the message is a non-access stratum message.
Example 87 is the method of any one of Examples 83 to 86, wherein the message is an attach request or a tracking area update message.
Example 88 is the method of any one of Examples 83 to 87, comprising reducing an area in which a paging message addressed to the communication terminal is to be sent in response to the message.
Example 89 is the method of any one of Examples 83 to 88, comprising decreasing the area in which the communication terminal may move without reporting location update information in response to the message.
Example 90 is the method of any one of Examples 83 to 89, comprising reducing a tracking area identity list associated with the communication terminal in response to the message.
Example 91 is the method of any one of Examples 83 to 90, comprising reducing the rate with which the communication terminal is to report location update information in response to the message.
Example 92 is the method of any one of Examples 83 to 91, comprising increasing a periodic tracking area update timer associated with the communication terminal in response to the message.
Example 93 is the method of any one of Examples 83 to 92, comprising adjusting the tracking update parameters in response to the message.
Example 94 is the method of any one of Examples 83 to 93, comprising indicating the adjustment of the tracking update parameters to the communication terminal.
Example 95 is the method of any one of Examples 83 to 94, further comprising transmitting a message to the communication terminal indicating the adjustment of the tracking update parameters.
Example 96 is the method of any one of Examples 83 to 95, performed by a mobile network control node.
Example 97 is the method of any one of Examples 83 to 96, wherein the message indicates a validity period of the non-mobility state and the method comprises setting the tracking update parameters of the communication layer based on the validity period.
Example 98 is the method of any one of Examples 83 to 97, comprising receiving, from the communication terminal, a second message, wherein the second message indicates that the non-mobility state of the communication terminal has ended and comprising setting the tracking update parameters in response to the second message.

The communication devices and the communication terminal (e.g. the receiver, the controller, the detector and the transmitter) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions which will be described in more detail below may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A communication device comprising:
a receiver, configured to receive, from a communication terminal, a message on a communication layer above radio resource control layer and below application layer, wherein the message indicates a non-mobility state of the communication terminal; and
a controller configured to set configuration parameters of the communication layer in response to the message.

2. The communication device of claim 1, wherein the non-mobility state is a state in which the movement speed of the communication terminal is below or equal to a predetermined threshold.

3. The communication device of claim 1 or 2, wherein the message is a control plane message.

4. The communication device of any one of claims 1 to 3, wherein the message is a non-access stratum message.

5. The communication device of any one of claims 1 to 4, wherein the message is an attach request or a tracking area update message.

6. The communication device of any one of claims 1 to 5, wherein the configuration parameters include tracking update parameters of the communication terminal.

7. The communication device of any one of claims 1 to 6, wherein the controller is configured to reduce an area in which a paging message addressed to the communication terminal is to be sent in response to the message.

8. The communication device of any one of claims 1 to 7, wherein the controller is configured to decrease the area in which the communication terminal may move without reporting location update information in response to the message.

9. The communication device of any one of claims 1 to 8, wherein the controller is configured to reduce a tracking area identity list associated with the communication terminal in response to the message.

10. The communication device of any one of claims 1 to 9, wherein the controller is configured to reduce the rate with which the communication terminal is to report location update information in response to the message.

11. The communication device of any one of claims 1 to 10, wherein the controller is configured to increase a periodic tracking area update timer associated with the communication terminal in response to the message.

12. The communication device of any one of claims 1 to 11, wherein the controller is configured to adjust the configuration parameters in response to the message.

13. A method for setting configuration parameters comprising:
receiving, from a communication terminal, a message on a communication layer above radio resource control layer and below application layer, wherein the message indicates a non-mobility state of the communication terminal; and
setting configuration parameters of the communication layer in response to the message.

14. A communication terminal comprising:
a detector configured to detect a non-mobility state of the communication terminal; and
a transmitter configured to, in response to a detection of the non-mobility state, transmit a message on a communication layer above radio resource control layer and below application layer, wherein the message indicates the non-mobility state of the communication terminal to a communication device.

15. A method for indicating a non-mobility state of a communication terminal comprising:
detecting a non-mobility state of the communication terminal; and
transmitting a message on a communication layer above radio resource control layer and below application layer, wherein the message indicates the non-mobility state of the communication terminal to a communication device in response to a detection of the non-mobility state.

## Amended claims

### Amended claims in accordance with Rule 137(2) EPC.

1. A communication device comprising:
a receiver, configured to receive, from a communication terminal, a tracking area update message on a communication layer above radio resource control layer and below application layer, wherein the tracking area update message indicates a non-mobility state of the communication terminal; and
a controller configured to set configuration parameters of the communication layer in response to the tracking area update message.

2. The communication device of claim 1, wherein the non-mobility state is a state in which the movement speed of the communication terminal is below or equal to a predetermined threshold.

3. The communication device of claim 1 or 2, wherein the tracking area update message is a control plane message.

4. The communication device of any one of claims 1 to 3, wherein the tracking area update message is a non-access stratum message.

5. The communication device of any one of claims 1 to 4, wherein the configuration parameters include tracking update parameters of the communication terminal.

6. The communication device of any one of claims 1 to 5, wherein the controller is configured to reduce an area in which a paging message addressed to the communication terminal is to be sent in response to the tracking area update message.

7. The communication device of any one of claims 1 to 6, wherein the controller is configured to decrease the area in which the communication terminal may move without reporting location update information in response to the tracking area update message.

8. The communication device of any one of claims 1 to 7, wherein the controller is configured to reduce a tracking area identity list associated with the communication terminal in response to the tracking area update message.

9. The communication device of any one of claims 1 to 8, wherein the controller is configured to reduce the rate with which the communication terminal is to report location update information in response to the tracking area update message.

10. The communication device of any one of claims 1 to 9, wherein the controller is configured to increase a periodic tracking area update timer associated with the communication terminal in response to the tracking area update message.

11. The communication device of any one of claims 1 to 10, wherein the controller is configured to adjust the configuration parameters in response to the tracking area update message.

12. A method for setting configuration parameters comprising:
receiving, from a communication terminal, a tracking area update message on a communication layer above radio resource control layer and below application layer, wherein the tracking area update message indicates a non-mobility state of the communication terminal; and
setting configuration parameters of the communication layer in response to the tracking area update message.

13. A communication terminal comprising:
a detector configured to detect a non-mobility state of the communication terminal; and
a transmitter configured to, in response to a detection of the non-mobility state, transmit a tracking area update message on a communication layer above radio resource control layer and below application layer, wherein the tracking area update message indicates the non-mobility state of the communication terminal to a communication device.

14. A method for indicating a non-mobility state of a communication terminal comprising:
detecting a non-mobility state of the communication terminal; and
transmitting a tracking area update message on a communication layer above radio resource control layer and below application layer, wherein the tracking area update message indicates the non-mobility state of the communication terminal to a communication device in response to a detection of the non-mobility state.
